# EUROPEAN PATENT SPECIFICATION

(11) **EP 1 898 292 B1**
(45) Date of publication and mention of the grant of the patent: **10.11.2010**
(21) Application number: 06120363.4
(22) Date of filing: 08.09.2006
(51) Int. Cl.: G05F 1/66, H02J 3/14, H02J 13/00

(54) **Apparatus and method for a global management of electrical power in an electric network**
Verfahren zur globalen Steuerung der elektrischen Leistung in einem elektrischen Netzwerk
Procédé de gestion globale de la puissance électrique dans un réseau

(43) Date of publication of application: 12.03.2008
(73) Proprietor: Eurosei S.r.l., 10090 Rosta TO (IT)
(72) Inventor: Iemmolo, Piero, 10090 Rosta (TO) (IT)
(74) Representative: Robba, Pierpaolo

(56) References cited:
- EP-A2- 0 597 322
- WO-A-01/37392
- WO-A1-01/15300
- WO-A2-2007/054914
- DE-U1- 20 218 249
- US-A- 4 324 987
- US-A- 4 819 180
- US-A1- 2002 012 323
- US-A1- 2004 075 343
- US-A1- 2006 190 139
- ROMAN R ET AL: "Commercial demand side management using a programmable logic controller" PROCEEDINGS OF THE POWER ENGINEERING SOCIETY TRANSMISSION AND DISTRIBUTION CONFERENCE. CHICAGO, APR. 10 - 15, 1994, NEW YORK, IEEE, US, 10 April 1994 (1994-04-10), pages 169-172, XP010122141 ISBN: 0-7803-1883-8

## Description

The present invention relates to an apparatus for controlling an electrical system.

More particularly, the present invention relates to an apparatus for controlling a civilian or industrial electrical system capable of managing possible overloads and of avoiding resulting interruptions in the electric current distribution.

The present invention further relates to a method for controlling an electrical system allowing to manage possible overloads and to avoid resulting interruptions in the electric current distribution.

As well known, a civilian or industrial electrical system generally begins from the terminals placed downwards the public network electricity meter, includes several components providing to the distribution, transfer and control of the electric current flow and ends at the reaching of an electrical load, which can be connected to the system either directly or through an electrical socket.

A maximum threshold in the electric current consumption is usually established in the contract that the user undersigns with the provider of the electric power distribution, said threshold being often expressed in terms of receivable nominal power. If such a threshold is exceeded either beyond a second reference threshold or for a too long period, the provider interrupts the distribution of electric power to the system.

By way of example, nowadays in Italy the provider allows to exceed the nominal power threshold within a margin of 10% of said nominal power without any consequence. Moreover, the provider allows to exceed the nominal power threshold within a margin comprised between 10% and about 30% of said nominal power without any consequence, provided that said threshold is exceeded for a maximum overall period of 4 hours in the space of a day. Once said maximum overall period is exceeded, the provider interrupts the distribution of electric power to the system. If the nominal power threshold is exceeded beyond a margin of about 30% of said nominal power, the interruption in the distribution of electric power to the system occurs after few seconds.

It is evident that, since the voltage is constant (and, for instance, equal to 220 V in Italy), the above-mentioned nominal power thresholds corresponds to respective thresholds in electric current consumption.

In general, the total consumption of all the electrical loads in a home electrical system largely exceeds the threshold established in the contract with the provider of the electric power distribution.

Therefore, further either to the connection of a too large number of electrical loads or to the simultaneous connection of high-consuming electrical loads, sudden interruptions in the electric power distribution to the system may occur.

More particularly, in a home system, such an interruption may occur if too many household appliances are employed at the same time or if, with a certain number of household appliances already in use, further automatic-start electrical loads, such as for instance an electric boiler, start operating. Moreover, always with reference to home systems, it is to be considered that the consumption of some household appliances (for instance washing machines and dishwashers) considerably vary over time according to their different operating steps.

In order to avoid sudden and unexpected interruptions in the electric power distribution, electronic devices have been developed, which measure the overall electric current consumption of the system and, if said consumption exceeds a given percentage of the established threshold, inform the user by means of acoustic or luminous signals.

Such a device is disclosed for instance in EP 45,286.

Nevertheless, even by employing such a device, if the user is not close to the signalling device and/or if he/she is not able to quickly disconnect a sufficient number of electrical loads, he/she will not be able to avoid the interruption in the electric current distribution to the system.

In order to overcome this drawback, in the past control apparatuses for electrical systems have been developed, which substantially comprise a central unit, provided with a microprocessor and a measuring circuit, and a plurality of peripheral units, to which corresponding electrical loads can be connected, said peripheral units being capable of disconnecting from the electrical system said electrical loads further to an order issued by the microprocessor of the central unit. In this way, in case of excessive consumption detected by its measuring circuit, the central unit can automatically (i.e. without any intervention of the user) control the disconnection of one or more electrical loads.

Such control apparatuses for home electrical systems are disclosed for instance in US 4,324,987, EP 750,383, WO 01/37392 and US 5,436,510.

US 2004/075343 and DE 20218249U1 also refer to control apparatuses for home electrical systems.

More particularly, US 2004/075343 discloses a control apparatuses for a home electrical system comprising a central unit that monitors the load feedback data and one or more peripheral units connected to electrical system loads and comprising a switch for switching on/off the corresponding electrical load upon reception of a control signal from the central unit. Said control apparatus further includes an operator interface which could communicate with the aforesaid central unit through RF wireless, while said central unit and said peripheral units are connected to each other through wiring connections.

DE 20218249U1 discloses a control apparatus for a home electrical system comprising a central unit that monitors and controls one or more peripheral units connected to electrical system loads; said central unit is provided with a wireless receiver for communicating with the wireless transmitter of a remote operator interface.

EP 597,322 refers to a management and control apparatus for a home electrical system comprising a central unit that monitors the overall electric current consumption and one or more peripheral units connected to electrical system loads and comprising a switch for switching on/off the corresponding electrical load upon reception of a control signal from the central unit, wherein the central unit and the peripheral units can communicate by means of radio links. According to EP 597,322, a priority scale is assigned to the peripheral units of the control apparatus and a specific, different threshold is associated to each priority level, so that in case the alarm threshold for a specific priority level is exceeded, the loads associated to this priority level will be disconnected, independently from the overall electric current consumption of the electrical system.

US 2006/190139 discloses a system, method and apparatus for managing utility consumption based upon analysis of historical data from a database and/or other statistical measures.

WO 2007/054914 relates to a home automation system wherein means are provided for remotely monitoring and controlling via an external connection device household appliances which originally do not incorporate necessary features to be remotely monitored and controlled.

Nevertheless, the installation of many of the above-described control apparatuses involves interventions on the electrical system, so that, even if said apparatuses can be easily introduced in new electrical systems, they can not be easily and cheaply incorporated in existing systems.

Moreover, in general said apparatuses are complex and, in case of need for maintenance, they require the intervention of skilled labour.

It is the main object of the present invention to provide a control apparatus for an electrical system that can be used in connection with existing electrical systems, without the need for any intervention of skilled labour.

It is another object of the present invention to provide a control apparatus that can be easily moved from an electrical system to another one, according to the needs of the user (for instance a removal).

It is a further object of the present invention to provide a control apparatus that is cheap and easy to install and to maintain.

It is a further object of the present invention to provide a method for controlling an electrical system that allows to efficaciously manage possible electric current overloads.

These and other objects of the invention are achieved by the apparatus and method for controlling an electrical system as claimed in the appended claims.

The control apparatus according to the invention comprises a central unit, provided with a sensor capable of detecting the overall electric current consumption of the system, and a plurality of peripheral units, to each of which a corresponding electrical load can be connected, said peripheral units being provided with a switch allowing to switch on or off said electrical loads. To this aim, the central unit comprises a wireless transmitter for sending control signals to the peripheral units, which in turn are provided with corresponding wireless receivers.

Thanks to the absence of wire connections, it is possible to associate the control apparatus according to the invention to any existing electrical system.

Moreover, the peripheral units can be moved from a load of the system to another one according to the needs of the user.

Furthermore, the control apparatus according to the invention can be separated from the electrical system to which it is associated, so that it can be easily moved from an electrical system to another one.

Finally, in case of failure or malfunction, it will not be necessary to make any intervention on the electrical system; on the contrary, it will be sufficient to remove the damaged central and/or peripheral unit.

A preferred embodiment of the apparatus for controlling an electrical system according to the invention, given by way of non-limiting example, will be now disclosed in detail, with reference to the attached drawings, wherein:
- Figure 1 schematically represents a home electrical system, to which the control apparatus according to the invention is associated;
- Figure 2 schematically represents the structure of the central unit and of the peripheral units of the control apparatus of Figure 1;
- Figure 3 is a block diagram schematically representing the operation of the control apparatus of Figure 1 and 2;
- Figure 4 represents the connection diagram of the central unit of the control apparatus of Figure 1 to the electrical system;
- Figure 5 shows the central unit of the control apparatus of Figure 1;
- Figure 6 shows a peripheral unit of the control apparatus of Figure 1;
- Figure 7 shows a signalling unit of the control apparatus of Figure 1.

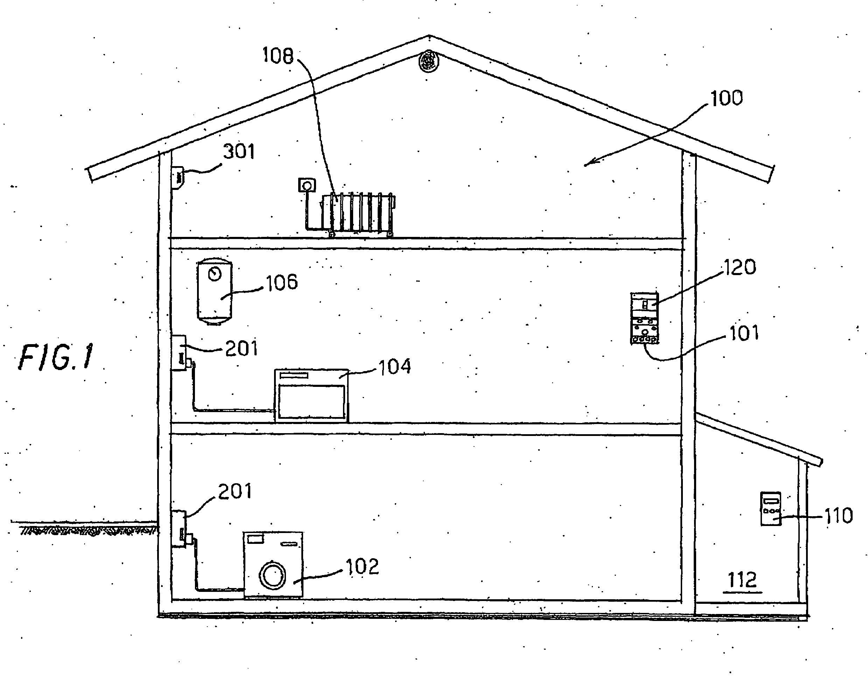

With reference to Figure 1, the control apparatus according to the invention is schematically shown, said apparatus being associated to a home electrical system 100.

Said electrical system begins downwards the electricity meter 110 of the provider of the electric power distribution, which is usually placed in separate premises 112. Said electricity meter 110 is connected to a general switch 120, from which the electrical lines heading for the different electrical loads 102-108 of the system 100 depart.

As in every home system, some electrical loads are manually started (for instance the washing machine 102, the oven 104), while other electrical loads are automatically started (for instance the boiler 106); moreover, the consumption of some electrical loads considerably vary over time (for instance the washing machine 102), while the consumption of other electrical loads is substantially constant over time (for instance the electrical heater 108).

The control apparatus according to the invention substantially comprises:
- a central unit 101, introduced downwards said general switch 120 and provided with an electric current sensor for measuring the overall electric current consumption in the system;
- one or more peripheral units 201, to each of which an electrical load 102-104 is electrically connected, said peripheral units 201 comprising a switch capable of switching on / off said electrical load;
said central unit 101 being able to send control signals to said peripheral units for controlling the switching off and the switching on of different electrical loads according to the measured overall electric current consumption.

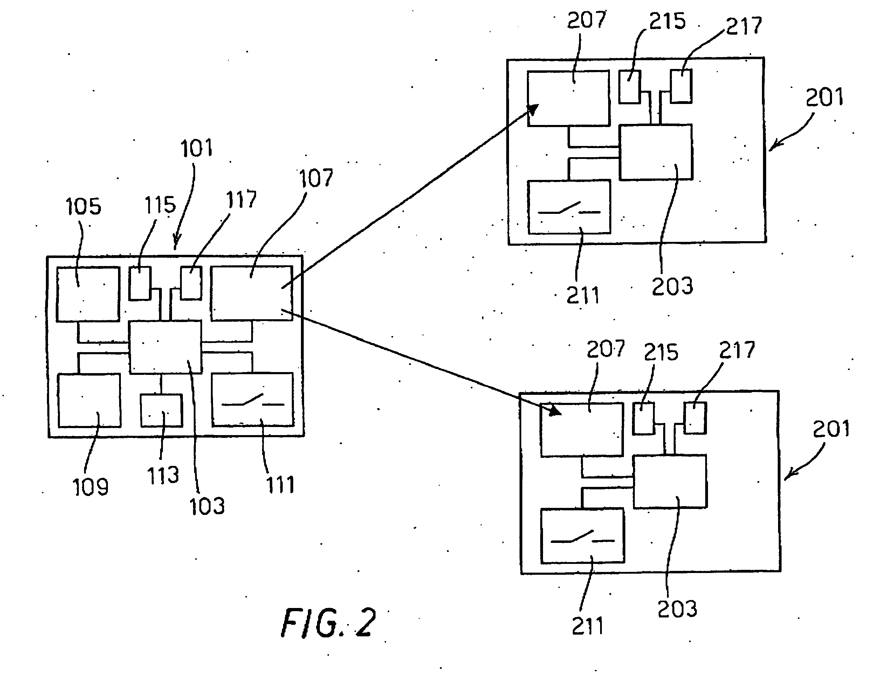

With reference to Figure 2, the structure of said central unit 101 and of said peripheral unit 201 is illustrated.

The central unit 101 comprises:
- an electric current sensor 105 for measuring the instantaneous overall electric current consumption in the system 100;
- a logical unit (preferably a microprocessor 103) allowing to compare the value measured by the sensor 105 with a pre-set threshold value and, in case the threshold value is exceeded, to send a control signal to one or more peripheral units 201 for switching off the electrical load connected thereto;
- a wireless transmitter 107 for transmitting said control signal to the peripheral units 201;
- a timer 113 controlled by the microprocessor 103 allowing to set a certain delay (on the order of 10⁻¹ s) between the moment when the pre-set threshold is exceeded and the moment when the microprocessor 103 sends the control signal, so as to avoid to take into account isolated peaks in the electric current absorption;
- a visual signalling device 115 and an acoustic signalling device 117 which are activated by the microprocessor 103 in case the pre-set threshold value is exceeded.

Correspondingly, each peripheral unit 201 comprises:
- a wireless receiver 207 for receiving the signal coming from the transmitter 107 of the central unit 101;
- a logical unit (preferably a microprocessor 203) allowing to decode the signal received by the receiver 207;
- a switch 211 (for instance a relay), controlled by said microprocessor 203 according to the control signal coming from the central unit 101, said switch allowing to switching off the electrical load connected to the peripheral unit according to the control signal coming from the central unit 101;
- a visual signalling device 215 and an acoustic signalling device 217 which are activated by the microprocessor 203 according to the control signal coming from the central unit 101 in case the pre-set threshold value is exceeded.

Preferably, the wireless transmitter 107 and the wireless receivers 207 employ the radio-frequency technology.

With reference to Figure 1, it is to be noted that the control apparatus according to the invention may also comprise one or more signalling units 301. Said signalling units 301 are similar to peripheral units 201, but they are not arranged for being connected to an electrical load; they only comprise a wireless receiver for receiving signals from the central unit 101, a logical unit (preferably a microprocessor) for decoding said signals and luminous and/or acoustic signalling devices that are activated according to the control signal coming from the central unit 101 in case the pre-set threshold value is exceeded.

According to the invention, in case of excessive consumption, the central unit 101, through the peripheral units 201, arranges for disconnecting from the system one or more electrical loads, until the instantaneous consumption is brought back below the pre-set threshold.

Advantageously, as it will be disclosed later on, it is possible to assign to the peripheral units 201 a scale of priority, so that the central unit 101 arranges for disconnecting at first the electrical loads connected with the units with lower priority, i.e. the electrical loads the functioning of which is considered less important.

With reference to Figure 2, also the central unit 101 can be provided with a switch 111 controlled by the microprocessor 103 of the central unit 101 itself, so that an electrical load can be directly connected to said central unit and managed thereby. On the contrary, said central unit will not be able to intervene on the remaining electrical loads 106,108, which are directly connected to the electrical system and which can be manually switched off by the user only. Nevertheless, also the consumption of said electrical loads is duly taken into account by means of the sensor 105 of the central unit 101.

Always with reference to Figure 2, the central unit 101 also comprises a memory 109, wherein the consumption of the electrical loads that have been disconnected is stored, as it will be disclosed later on. In this way, when the electric current measured by the sensor 105 is sufficiently low and it remains sufficiently low for a sufficiently long period, the microprocessor 103, through the wireless transmitter 107, can send a control signal to the corresponding peripheral unit 201 for providing to the switching on of the electrical load associated thereto, which has been previously disconnected.

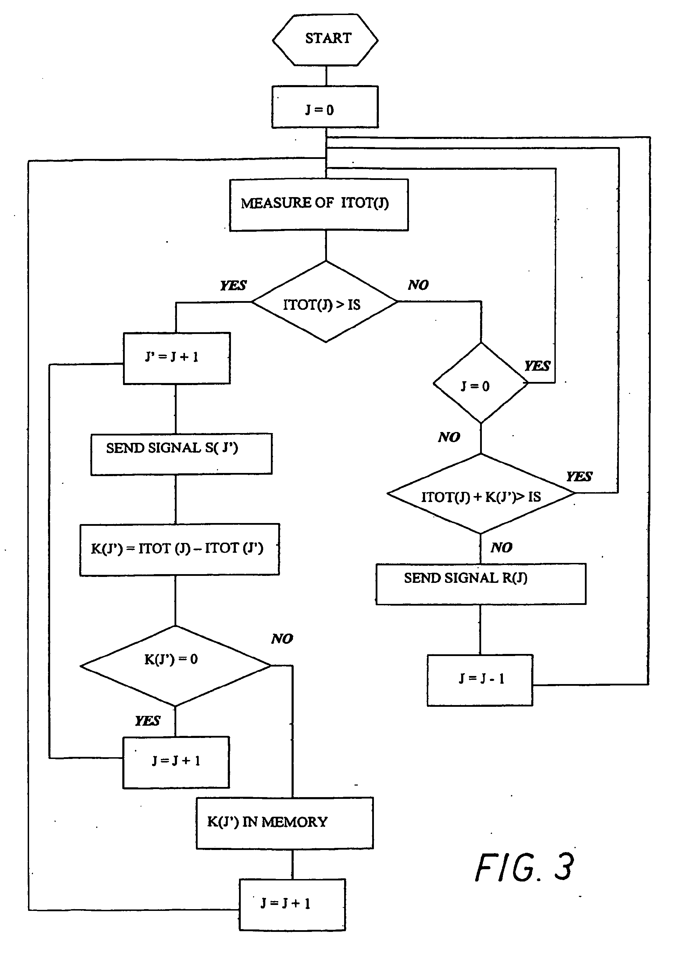

The control loop performed by the above-disclosed apparatus will be better understood with reference to the block diagram of Figure 3:
- the control loop is started (step 11), the value of counter J being initially set at zero (step 13);
- the instantaneous overall electric current consumption ITOT (J) is measured (step 15), said measure representing the electric current consumption of the system when the electrical loads having priority lower than or equal to J are switched off (if J = 0, no electrical load has been disconnected);
- said consumption ITOT (J) is compared with a pre-set threshold value IS (step 17).

If the threshold value IS is exceeded:
- the value of J is increased by one, thus bringing it to J'=J+1 (step 19) and, after a time period t established by the timer 113, a switching off signal S (J') is sent (step 21), said signal being selectively received only by the peripheral units having priority equal to J', said peripheral units providing to the switching off of the electrical loads connected thereto;
- the overall electric current consumption before and after the above-disclosed switching off of the electrical loads are compared and their difference K(J') is calculated (step 23);
- if K(J')=0 (step 25), i.e. if the electrical loads connected to peripheral units 201 with priority J' were already disconnected and the sending of the signal S(J') has had no effect, the priority J is increased (step 27) and the loop is repeated starting from step 19;
- if K(J') #0, i.e. if one or more electrical loads have been switched off further to the sending of the signal S(J'), the aforesaid difference K(J') is stored (step 29); then, the value of the counter J is increased (step 31) and the loop is repeated starting from a new measure of the overall electric current consumption (step 15).

Therefore, following said control loop, the central unit 101 sends signals S(1), S(2), S(3),... thus controlling the switching off of electrical loads connected to peripheral units with increasing priority, until the overall electric current consumption is brought back below the threshold value IS.

If at step 17 the threshold value IS is not exceeded:
- if J=0 (step 33), i.e. if no electrical load has been switched off by the control apparatus, the control loop is repeated starting from a new measure of the overall electric current consumption (step 15);
- if J≠0, i.e. if one or more switching off signals have been previously sent for switching off the electrical loads connected to peripheral units having priority lower than or equal to J, the total of the overall consumption ITOT (J) measured at that time and of the electrical consumption K(J') of the electrical loads having the highest priority among the loads that have been disconnected is compared with the threshold value IS (step 35);
- if said total is higher than the threshold value IS, i.e. if the overall consumption ITOT (J) measured at that time is not sufficiently low to allow the switching on of the previously switched off electrical loads, the control loop is repeated starting from a new measure of the overall electric current consumption (step 15);
- if said total is lower than the threshold value IS, a switching on signal R(J) is sent (step 39), said signal being selectively received only by the peripheral units 201 with priority equal to J and causing the switching on of the corresponding electrical loads;
- the value of counter J is decreased (step 41) and the control loop is repeated starting from a new measure of the overall consumption ITOT(J) (step 15).

Thanks to the above control loop, the central unit 101 sends signals R(N), ... R(2), R(1), controlling the switching on of previously switched off electrical loads that are connected to peripheral units with decreasing priority, when the measured overall electric current consumption allows it.

Thus, the priority order followed for the switching off of the electrical loads if the threshold value is exceeded is advantageously respected (obviously reversed) when the previously disconnected electrical loads are switched on again.

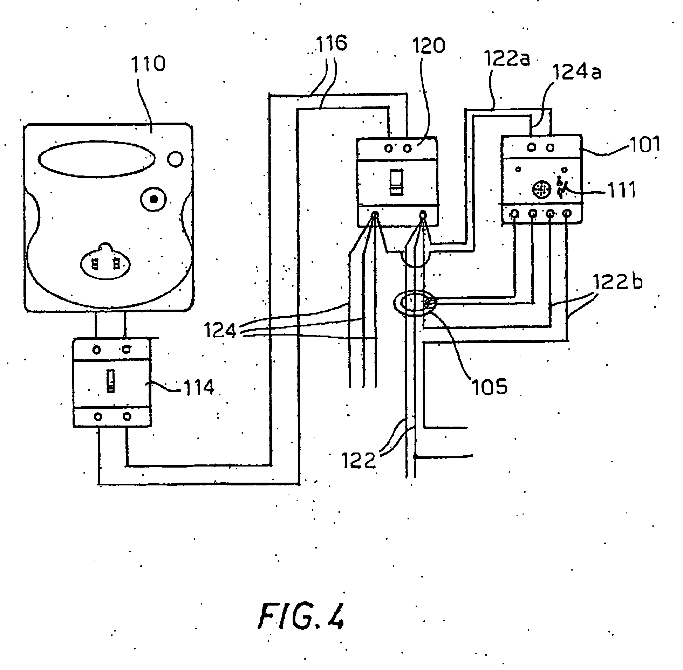

With reference now to Figure 4, the electrical connection diagram of the central unit 101 to the electrical system 100 is illustrated.

A general switch 120 is connected by means of an electric supply line 116 downwards the electricity meter 110 of the provider of the electric power distribution, which can be possibly provided with its own electric current switch 114.

The lines of the electrical system depart from the general switch 120, said lines comprising phase conductors 122 and neutral conductors 124 and heading for the electrical sockets and the electrical loads of the system. The central unit 101 itself is connected to the electrical system 100 by means of a phase conductor 122a and a neutral conductor 124a.

As clearly shown in Figure 4, the electric current sensor 105 of the central unit 101 consists in a toroidal shaped coil surrounding all the phase conductors 122; therefore said sensor measures the electric current that flows in all the phase conductors 122 departing from the general switch 120. In the illustrated embodiment, a phase conductor 122b is directly connected to the central unit 101 at the switch 111, so that the electrical load supplied through said conductor 122b can be directly disconnected by the central unit 101.

Advantageously, thanks to this arrangement, it is possible to disconnect an electrical load that is not connected to the electrical system 100 through an electrical socket (for instance a boiler) and that, consequently, could not be connected to a peripheral unit 201.

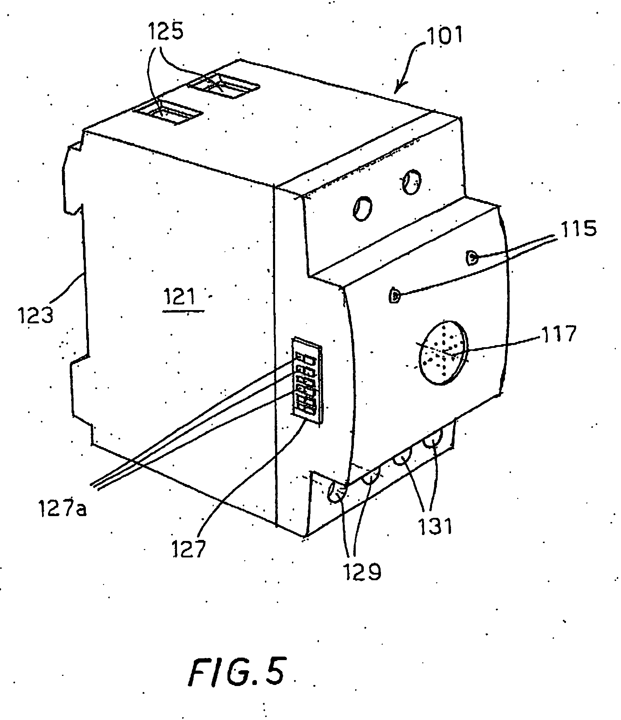

With reference now to Figure 5, the central unit 101 of the control apparatus according to the invention is shown in detail.

Said central unit 101 comprises a substantially parallelepiped casing 121 that contains the microprocessor 103, the wireless transmitter 107 and the memory 109 shown in Figure 2 and that can be associated to the general switch 120 of the electrical system, for instance by means of a Ω-shaped clamp 123. The central unit 101 is also electrically connected downwards said general switch 120 by means of a pair of supply terminals 125.

A dip-switch commutator 127 is applied on the casing 121. Said commutator comprises a plurality of binary ON/OFF switches 127a, the configuration of which represents the univocal address of the wireless transmitter 107 in the wireless communication system.

More particularly, the position of a first group of switches 127a indicates that the central unit belongs to the control apparatus, thus avoiding that the transmitter 107 interferes with the wireless receivers of other control apparatuses in the neighbourhood, if any; the position of a second group of switches 127a identifies the central unit as transmitting unit.

A first terminal board 129 for the connection of the electric current sensor 105 and a second terminal board 131 for the connection of an electrical load to the switch 111 of the central unit 101 are also provided on the casing 121.

In Figure 5 the luminous signalling devices 115 and the acoustic signalling device 117 are also shown.

In the illustrated embodiment, said luminous signalling devices simply comprise a pair of LED, a green LED (switched on if the instantaneous electric current consumption is lower than the pre-set threshold) and a red LED (switched on if the instantaneous electric current consumption is higher than said threshold). More complex signalling devices can also be provided, for instance intermittent signalling devices, having luminosity and/or frequency variable over time according to the electric current consumption measured by the sensor 105.

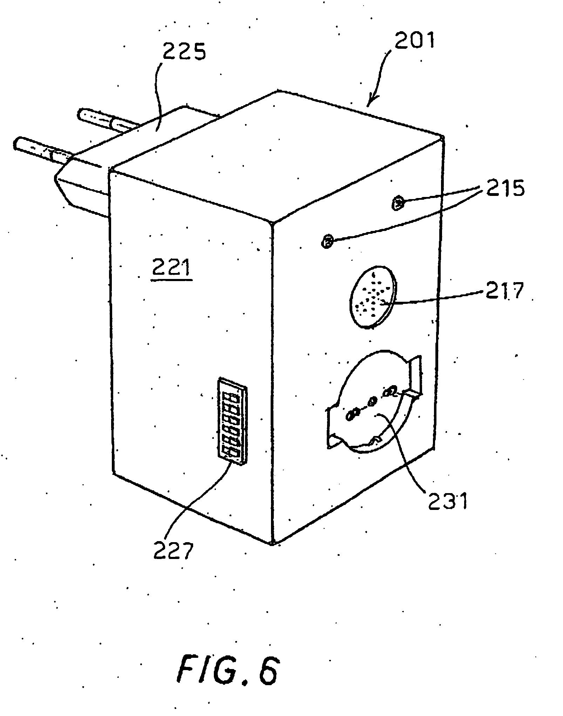

With reference now to Figure 6, a peripheral unit 201 of the control apparatus according to the invention is shown in detail.

Said peripheral unit 201 comprises a substantially parallelepiped casing 221 provided with a plug 225 for inserting the peripheral unit 201 into an electrical socket of the electrical system 100 and with an electrical socket 231 for the connection to an electrical load.

Said casing 221 substantially contains the wireless receiver 207 and the microprocessor 203 shown in Figure 2.

A dip-switch commutator 227, analogous to the commutator 127 of the central unit 101, is shown on the casing 221. In this case, the position of a first group of switches indicates that the peripheral unit belongs to the control apparatus (therefore said position will be the same for all the units 201), while the position of a second group of switches identifies the unit as receiving unit with an assigned set priority (therefore said position will be different for peripheral units with different priority).

In Figure 6 the luminous signalling devices 215 and the acoustic signalling device 217 of the peripheral unit 201 are also shown.

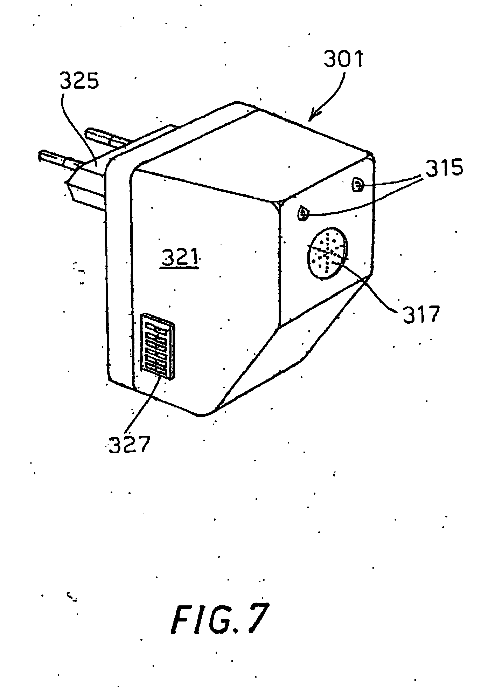

With reference now to Figure 7, a signalling unit 301 is shown.

Also this unit comprises a substantially parallelepiped casing 321 containing therein the wireless receiver and a microprocessor and it can be connected to an electrical socket of the electrical system 100 by means of a plug 325.

Moreover, in Figure 7 the dip-switch commutator 327 of the signalling unit 301 and the luminous 315 and acoustic 317 signalling devices, analogous to the corresponding components of the peripheral units 201, are shown.

It is evident from the above description that the apparatus and method according to the invention achieve the above-indicated objects, thanks to the great versatility and easiness of use conferred by the utilisation of wireless transmitter and receivers.

It is also evident that, even if the invention has been disclosed with reference to a preferred embodiment, many modifications and variants can be made without departing from the scope of the invention itself, as defined by the appended claims.

More particularly, the central unit 101, the peripheral units 201 and, if present, the signalling units 301, can have different shapes and sizes, which can be adapted to specific aesthetic needs and which can vary according to the sizes and functions of new products and new possible technologies that could be developed in the future.

For instance, the peripheral units 201 can be made with the size of a standard civilian or industrial socket or switch, thus allowing to place them near sockets or switches already existing in the different premises, so that both a correct functioning and an overall aesthetic appearance that is agreeable and consistent with the pre-existing elements are ensured.

## Claims

1. Control apparatus for a home electrical system (100) comprising at least:
- a central unit (101), provided with a sensor (105) for measuring the overall electric current consumption of said system (100) and with a logical unit (103) for comparing said consumption measured by said sensor with a pre-set threshold value and a transmitter (107);
- one or more peripheral units (201), to each of which an electrical load (102,104) can be connected, said peripheral units comprising a receiver (207) and a switch (211) for switching on/off said electrical load, each peripheral unit (201) further comprising means for assigning a priority value (J) within a scale of priority to said peripheral unit;
said central unit (101) being able to send control signals to said peripheral units (201) for controlling the switching on/off of said electrical loads (102,104), wherein said transmitter of said central unit is a wireless transmitter (107) for transmitting control signals to said peripheral units (201) and said receivers (207) of said peripheral units (201) are wireless receivers (207) for receiving said control signals, said peripheral units being further provided with a logical unit for decoding said control signals and accordingly controlling said switch (211), **characterised in that** said central unit (101) is configured to carry out a control loop comprising the following steps
- providing a counter and setting the value (J) of said counter at zero;
- measuring the instantaneous overall electric current consumption (ITOT (J)), wherein said measure represents the electric current consumption of said electrical system (100) when the electrical loads having priority lower than or equal to said value (J) of said counter are switched off ;
- comparing said instantaneous overall electric current consumption (ITOT (J)) with a pre-set threshold value (IS);
- in case said instantaneous overall electric current consumption (ITOT (J)) is greater than said pre-set threshold value (IS):
- increasing said value (J) of said counter by one, thus obtaining an increased value (J') of said counter;
- after a time period (t) established by a timer (113), sending a switching off signal (S (J')), said signal being selectively received only by the peripheral units (201) having a priority value equal to said increased value (J') of said counter, said peripheral units (201) providing to the switching off of the electrical loads connected thereto;
- measuring the instantaneous overall electric current consumption after the switching off of said electrical loads, comparing with the instantaneous overall electric current consumption measured before the switching off of said electrical loads and calculating their difference K(J');
- if said difference is equal to zero, further increasing said value of said counter by one and repeating said control loop starting from the step of sending said switching off signal (S (J'));
- if said difference is different from zero, storing said difference K(J'), further increasing said value of said counter by one and repeating said control loop starting from the step of measuring said instantaneous overall electric current consumption (ITOT (J));
- in case said instantaneous overall electric current consumption (ITOT (J)) is lower than or equal to said pre-set threshold value (IS):
- if said value of said counter (J) is equal to zero, repeating said control loop starting from a new measure said overall electric current consumption;
- if said value of said counter (J) is different from zero, comparing the total of said instantaneous overall electric current consumption (ITOT (J)) and of the electrical consumption (K(J')) of the electrical loads having the highest priority value among the loads that have been disconnected with said pre-set threshold value (IS);
- if said total is higher than said pre-set threshold value (IS), repeating said control loop starting from a new measure of said overall electric current consumption;
- if said total is lower than the said pre-set threshold value (IS), sending a switching on signal (R(J)), said signal being selectively received only by said peripheral units (201) having a priority value equal to said value (J') of said counter, said peripheral units (201) providing to the switching off of the electrical loads connected thereto;
- decreasing said value (J) of said counter by one and repeating said control loop starting from a new measure of said overall electric current consumption (ITOT(J)).

2. Apparatus according to claim 1, wherein said logical units of said central unit (101) and of said peripheral units (201) preferably are microprocessors (103,203).

3. Apparatus according to claim 2, wherein said central unit further comprises a memory (109) wherein said difference (K(J')) between said electric current consumption values measured by said sensor (105) before and after a control signal for the switching off (S(J')) of one of said electrical loads is sent is stored.

4. Apparatus according to claim 2, wherein an electrical load of said home system (100) is connected to said central unit (101), said central unit comprising a switch (111) controlled by said microprocessor (103) of said central unit for switching on/off said electrical load.

5. Apparatus according to claim 2, wherein said central unit (101) and/or said peripheral units (201) further comprise luminous (115,215) and/or acoustic (117,217) signalling devices controlled by control signals sent by said microprocessor (103) of said central unit (101).

6. Apparatus according to claim 2, wherein said central unit (101) and said peripheral units (201) are provided with dip-switch commutators (127,227), the configuration of which allows to determine that said units (101,201) belong to said apparatus and to identify said units as transmitting unit (101) and receiving units (201) respectively.

7. Apparatus according to claim 6, wherein the different configuration of said dip-switch commutators in said peripheral units (201) allows to determine the priority of said peripheral units (201).

8. Apparatus according to claim 2, further comprising one or more signalling units (301) comprising a wireless receiver for receiving control signals from said central unit (101), a microprocessor for decoding said control signals and luminous (315) and/or acoustic (317) signalling devices controlled by said control signals.

9. Apparatus according to claim 2, wherein said central unit (101) comprises a casing (121) containing at least said microprocessor (103) and said wireless transmitter (107) and comprising a pair of supply terminals (125) for the connection to said electrical system (100).

10. Apparatus according to claim 2, wherein each of said peripheral units (201) comprises a casing (221) containing at least said microprocessor (203) and said wireless receiver (207) and comprising a plug (225) for the connection to said electrical system (100) and an electrical socket (231) for the connection to an electrical load (102,104).

11. Apparatus according to claim 8, wherein each of said signalling units (301) comprises a casing (321) containing at least said microprocessor and said wireless receiver and comprising a plug (325) for the connection to said electrical system (100) and a dip-switch commutator for determining that said units (301) belong to said apparatus and for identifying them as receiving units.

12. Apparatus according to any preceding claim, wherein said wireless transmitter (107) and receivers (207) are radio-frequency transmitter and receivers respectively.

13. Apparatus according to any preceding claim, wherein said switches (111,211) of said peripheral units and/or of said central unit comprise a relay.

14. Method for controlling a home electrical system (100) comprising the steps of:
- providing a central unit provided with an electric current sensor (105), a logical unit (103) and a transmitter (107);
- providing one or more peripheral units (201) provided with a receiver (207) and a switch for switching off/on corresponding electrical loads (102,104) of said system (100);
- assigning a scale of priority to said peripheral units (201);
- measuring the instantaneous overall electric current consumption of said system (100);
- comparing said measured instantaneous consumption with a pre-set threshold value;
- sending a control signal from said central unit to said peripheral units for switching off the corresponding electrical load (102,104) if said threshold value is exceeded,
wherein said transmitter of said central unit (101) is a wireless transmitter (107) for transmitting control signals to said peripheral units (201) and said receivers of said peripheral units (201) are wireless receivers (207) for receiving said control signals, said peripheral units (201) being further provided with a logical unit for decoding said control signals and accordingly controlling said switch (211),
**characterised in that** said method comprises a control loop comprising the following steps:
- providing a counter and setting the value (J) of said counter at zero;
- measuring the instantaneous overall electric current consumption (ITOT (J)), wherein said measure represents the electric current consumption of said electrical system (100) when the electrical loads having priority lower than or equal to said value (J) of said counter are switched off;
- comparing said instantaneous overall electric current consumption (ITOT (J)) with a pre-set threshold value (IS);
- in case said instantaneous overall electric current consumption (ITOT (J)) is greater than said pre-set threshold value (IS):
- increasing said value (J) of said counter by one, thus obtaining an increased value (J') of said counter;
- after a time period (t) established by a timer (113), sending a switching off signal (S (J')), said signal being selectively received only by the peripheral units (201) having a priority value equal to said increased value (J') of said counter, said peripheral units (201) providing to the switching off of the electrical loads connected thereto;
- measuring the instantaneous overall electric current consumption after the switching off of said electrical loads, comparing with the instantaneous overall electric current consumption measured before the switching off of said electrical loads and calculating their difference K(J');
- if said difference is equal to zero, further increasing said value of said counter by one and repeating said control loop starting from the step of sending said switching off signal (S (J'));
- if said difference is different from zero, storing said difference K(J'), further increasing said value of said counter by one and repeating said control loop starting from the step of measuring said instantaneous overall electric current consumption (ITOT (J));
- in case said instantaneous overall electric current consumption (ITOT (J)) is lower than or equal to said pre-set threshold value (IS):
- if said value of said counter (J) is equal to zero, repeating said control loop starting from a new measure said overall electric current consumption;
- if said value of said counter (J) is different from zero, comparing the total of said instantaneous overall electric current consumption (ITOT (J)) and of the electrical consumption (K(J')) of the electrical loads having the highest priority value among the loads that have been disconnected with said pre-set threshold value (IS);
- if said total is higher than said pre-set threshold value (IS), repeating said control loop starting from a new measure of said overall electric current consumption;
- if said total is lower than the said pre-set threshold value (IS), sending a switching on signal (R(J)), said signal being selectively received only by said peripheral units (201) having a priority value equal to said value (J') of said counter, said peripheral units (201) providing to the switching off of the electrical loads connected thereto;
- decreasing said value (J) of said counter by one and repeating said control loop starting from a new measure of said overall electric current consumption (ITOT(J)).

## Patentansprüche

1. Bedienungsgerät für ein elektrisches Haussystem (100) umfassend zumindest:
- eine Zentraleinheit (101), die mit einem Sensor (105) zur Messung des Gesamtstromverbrauchs des Systems (100) versehen ist und eine Logikeinheit (103) zum Vergleich des durch diesen Sensor gemessenen Verbrauchs mit einem vorbestimmten Schwellenwert sowie einen Sender (107) aufweist;
- eine oder mehrere periphere(n) Einheit(en) (201), an die jeweils eine elektrische Last (102, 104) anschliessbar ist, wobei diese peripheren Einheiten einen Empfänger (207) und einen Schalter (211) zum Ein-/Ausschalten dieser elektrischen Last umfassen, und wobei jede periphere Einheit (201) zusätzlich Mittel zur Bestimmung eines innerhalb einer Prioritätsskala liegenden Prioritätswerts (J) für diese periphere Einheit umfasst;
wobei die Zentraleinheit (101) Steuersignale an diese peripheren Einheiten (201) sendet, um das Ein-/Ausschalten der elektrischen Lasten (102, 104) zu steuern, wobei dieser Sender der Zentraleinheit ein drahtloser Sender (107) zur Übertragung von Steuersignalen an diese peripheren Einheiten (201) ist und die Empfänger (207) der peripheren Einheiten (201) drahtlose Empfänger zum Empfang dieser Steuersignale sind, und wobei diese peripheren Einheiten zusätzlich mit einer Logikeinheit zur Dekodierung dieser Steuersignale und zur entsprechenden Bedienung dieses Schalters (211) versehen sind, **dadurch gekennzeichnet, dass** die Zentraleinheit (101) zur Ausführung einer Steuerschleife mit den folgenden Schritten ausgebildet ist:
- einen Zähler anzuordnen und den Wert (J) dieses Zählers auf Wert Null zu setzen;
- den momentanen Gesamtstromverbrauch (ITOT (J)) zu messen, wobei diese Messung den Stromverbrauch dieses elektrischen Systems (100) bei abgeschalteten elektrischen Lasten mit Priorität niedriger oder gleich als dieser Wert (J) darstellt;
- diesen momentanen Gesamtstromverbrauch (ITOT (J)) mit einem vorbestimmten Schwellenwert (IS) zu vergleichen;
- falls der momentane Gesamtstromverbrauch (ITOT (J)) höher als der vorbestimmte Schwellenwert (IS) ist:
- diesen Wert (J) des Zählers um eins zu erhöhen, sodass ein erhöhter Wert (J') des Zählers erreicht wird;
- nach einer durch eine Schaltuhr (113) bestimmten Zeitperiode (t), ein Ausschaltsignal (S (J')) zu senden, wobei dieses Signal selektiverweise nur durch die peripheren Einheiten (201), die einen Prioritätswert identisch mit diesem erhöhten Wert (J') des Zählers aufweisen, empfangen wird, wobei diese peripheren Einheiten (201) das Ausschalten der daran angeschlossenen elektrischen Lasten bewirken;
- den momentanen Gesamtstromverbrauch nach dem Ausschalten dieser elektrischen Lasten zu messen, diesen mit dem vor dem Ausschalten dieser elektrischen Lasten gemessenen Gesamtstromverbrauch zu vergleichen und ihre Differenz (K (J')) zu berechnen;
- wenn diese Differenz gleich null ist, diesen Wert des Zählers um eins weiter zu erhöhen und diese Steuerschleife ausgehend von dem Schritt der Sendung des Ausschaltsignals (S(J')) zu wiederholen;
- wenn diese Differenz verschieden von null ist, diese Differenz (K (J')) zu speichern, diesen Wert des Zählers um eins weiter zu erhöhen und diese Steuerschleife ausgehend von dem Schritt der Messung dieses momentanen Gesamtstromverbrauchs (ITOT (J)) zu wiederholen;
- falls der momentane Gesamtstromverbrauch (ITOT (J)) niedriger oder gleich als der vorbestimmte Schwellenwert (IS) ist:
- wenn dieser Wert (J) des Zählers gleich null ist, diese Steuerschleife ausgehend von einer neuen Messung dieses Gesamtstromverbrauchs zu wiederholen;
- wenn dieser Wert (J) des Zählers verschieden von null ist, die Summe aus diesem momentanen Gesamtstromverbrauch (ITOT (J)) und dem Stromverbrauch (K (J')) der elektrischen Lasten, die unter den mit diesem bestimmten Schwellenwert (IS) ausgeschalteten Lasten den höchsten Prioritätswert aufweisen, zu vergleichen;
- wenn diese Summe höher als der vorbestimmte Schwellenwert (IS) ist, diese Steuerschleife ausgehend von einer neuen Messung dieses Gesamtstromverbrauchs zu wiederholen;
- wenn diese Summe niedriger als der vorbestimmte Schwellenwert (IS) ist, ein Einschaltsignal (R(J)) zu senden, wobei dieses Signal selektiverweise nur durch die peripheren Einheiten (201), die einen Prioritätswert identisch mit diesem erhöhten Wert (J') des Zählers aufweisen, empfangen wird, wobei diese peripheren Einheiten (201) das Ausschalten der daran angeschlossenen elektrischen Lasten bewirken;
- diesen Wert (J) des Zählers um eins zu verringern und diese Steuerschleife ausgehend von einer neuen Messung dieses Gesamtstromverbrauchs (ITOT(J)) zu wiederholen.

2. Gerät nach Anspruch 1, wobei diese Logikeinheiten der Zentraleinheit (101) und der peripheren Einheiten (201) vorzugsweise Mikroprozessoren sind.

3. Gerät nach Anspruch 2, wobei diese Zentraleinheit zusätzlich einen Speicher (109) umfasst, in dem die Differenz (K(J')) zwischen den Gesamtstromverbrauchswerten, die durch den Sensor (105) bevor und nach der Sendung eines Steuersignals (S(J')) zum Ausschalten einer von diesen elektrischen Lasten gemessen werden, gespeichert wird.

4. Gerät nach Anspruch 2, wobei eine elektrische Last des Haussystems (100) an diese Zentraleinheit (101) angeschlossen ist, und wobei die Zentraleinheit einen durch den Mikroprozessor (103) dieser Zentraleinheit gesteuerte Schalter (111) zum Ein-/Ausschalten dieser elektrischen Last umfasst.

5. Gerät nach Anspruch 2, wobei die Zentraleinheit (101) und/oder die peripheren Einheiten (201) zusätzlich Lichtsignalvorrichtungen (115,215) und/oder Akustiksignalvorrichtungen (117,217) umfasst/umfassen, die mittels durch den Mikroprozessor (103) der Zentraleinheit (101) gesendeter Steuersignale gesteuert werden.

6. Gerät nach Anspruch 2, wobei die Zentraleinheit (101) und die peripheren Einheiten (201) mit Dip-Switch-Umschaltern (127,227) versehen sind, deren Ausbildung ermöglicht, festzustellen, dass diese Einheiten (101,201) diesem Gerät gehören, und diese Einheiten als Sendeeinheiten (101) bzw. Empfangseinheiten (201) zu identifizieren.

7. Gerät nach Anspruch 6, wobei die besondere Ausbildung dieser Dip-Switch-Umschalter bei den peripheren Einheiten (201) ermöglicht, die Priorität dieser peripheren Einheiten (201) festzustellen.

8. Gerät nach Anspruch 2, zusätzlich umfassend eine oder mehrere Signaleinheit(en) (301) mit einem drahtlosen Empfänger zum Empfang von Steuersignalen aus der Zentraleinheit (101), mit einem Mikroprozessor zur Dekodierung dieser Steuersignale und mit Lichtsignalvorrichtungen (315) und/oder Akustiksignalvorrichtungen (317), die durch diese Steuersignale gesteuert werden.

9. Gerät nach Anspruch 2, wobei die Zentraleinheit (101) ein zumindest den Mikroprozessor (203) und den drahtlosen Sender (107) aufnehmendes Gehäuse (121) umfasst, das ein Paar von Versorgungsanschlüsse (125) zum Anschluss an das elektrische System (100) aufweist.

10. Gerät nach Anspruch 2, wobei jede von diesen peripheren Einheiten (201) ein zumindest den Mikroprozessor (203) und den drahtlosen Empfänger (207) aufnehmendes Gehäuse (221) umfasst, das einen Stecker (225) zum Anschluss an das elektrische System (100) und eine Steckdose (231) zum Anschluss an eine elektrische Last (102,104) aufweist.

11. Gerät nach Anspruch 8, wobei jede von diesen Signaleinheiten (301) ein zumindest den Mikroprozessor (203) und den drahtlosen Empfänger aufnehmendes Gehäuse (221) umfasst, das einen Stecker (325) zum Anschluss an das elektrische System (100) und einen Dip-Switch-Umschalter zur Bestimmung, dass diese Einheiten (301) diesem Gerät gehören, und zur Identifizierung derselben als Empfangseinheiten, aufweist.

12. Gerät nach einem der vorhergehenden Ansprüche, wobei der drahtlose Sender (107) und die drahtlosen Empfänger (207) Hochfrequenz-Sender bzw. -Empfänger sind.

13. Gerät nach einem der vorhergehenden Ansprüche, wobei die Schalter (111,211) der peripheren Einheiten und/oder der Zentraleinheit ein Relais umfassen.

14. Verfahren zur Bedienung eines elektrischen Haussystems (100) umfassend die folgenden Schritte:
- eine Zentraleinheit anzuordnen, die mit einem Stromsensor (105), einer Logikeinheit (103) und einem Sender (107) versehen ist;
- eine oder mehrere periphere(n) Einheit(en) (201) anzuordnen, die mit einem Empfänger (207) und einem Schalter zum Ein-/Ausschalten von entsprechenden elektrischen Lasten (102,104) des Systems (100) versehen ist/sind;
- eine Prioritäts skala für diese peripheren Einheiten (201) zu bestimmen;
- den momentanen Gesamtstromverbrauch des Systems (100) zu messen;
- diesen gemessenen Stromverbrauch mit einem vorbestimmten Schwellenwert zu vergleichen;
- ein Steuersignal aus dieser Zentraleinheit an diese peripheren Einheiten zu senden, um die entsprechende elektrische Last (102,104) auszuschalten, wenn dieser Schwellenwert überschritten wird,
wobei dieser Sender der Zentraleinheit (101) ein drahtloser Sender (107) zur Übertragung von Steuersignalen an diese peripheren Einheiten (201) ist und diese Empfänger (207) der peripheren Einheiten (201) drahtlose Empfänger zum Empfang dieser Steuersignale sind, und wobei diese periphere Einheiten (201) zusätzlich mit einer Logikeinheit zur Dekodierung dieser Steuersignale und zur entsprechenden Bedienung des Schalters (211) versehen sind,
**dadurch gekennzeichnet, dass** dieses Verfahren eine Steuerschleife mit den folgenden Schritten umfasst:
- einen Zähler anzuordnen und den Wert (J) dieses Zählers auf Wert Null zu setzen;
- den momentanen Gesamtstromverbrauch (ITOT (J)) zu messen, wobei diese Messung den Stromverbrauch dieses elektrischen Systems (100) bei abgeschalteten elektrischen Lasten mit Priorität niedriger oder gleich als dieser Wert (J) darstellt;
- diesen momentanen Gesamtstromverbrauch (ITOT (J)) mit einem vorbestimmten Schwellenwert (IS) zu vergleichen;
- falls der momentane Gesamtstromverbrauch (ITOT (J)) höher als der vorbestimmten Schwellenwert (IS) ist:
- diesen Wert (J) des Zählers um eins zu erhöhen, sodass ein erhöhter Wert (J') des Zählers erreicht wird;
- nach einer durch eine Schaltuhr (113) bestimmten Zeitperiode (t), ein Ausschaltsignal (S (J')) zu senden, wobei dieses Signal selektiverweise nur durch die peripheren Einheiten (201), die einen Prioritätswert identisch mit diesem erhöhten Wert (J') dieses Zählers aufweisen, empfangen wird, wobei diese peripheren Einheiten (201) das Ausschalten der daran angeschlossenen elektrischen Lasten bewirken;
- den momentanen Gesamtstromverbrauch nach dem Ausschalten dieser elektrischen Lasten zu messen, diesen mit dem vor dem Ausschalten dieser elektrischen Lasten gemessenen Gesamtstromverbrauch zu vergleichen und ihre Differenz (K (J') zu berechnen;
- wenn diese Differenz gleich null ist, diesen Wert des Zählers um eins weiter zu erhöhen und diese Steuerschleife ausgehend von dem Schritt der Sendung des Ausschaltsignals (S(J')) zu wiederholen;
- wenn diese Differenz verschieden von null ist, diese Differenz (K (J')) zu speichern, diesen Wert des Zählers um eins weiter zu erhöhen und diese Steuerschleife ausgehend von dem Schritt der Messung dieses momentanen Gesamtstromverbrauch (ITOT (J)) zu wiederholen;
- falls der momentane Gesamtstromverbrauch (ITOT (J)) niedriger oder gleich als der vorbestimmte Schwellenwert (IS) ist:
- wenn dieser Wert (J) des Zählers gleich null ist, diese Steuerschleife ausgehend von einer neuen Messung dieses Gesamtstromverbrauchs zu wiederholen;
- wenn dieser Wert (J) des Zählers verschieden von null ist, die Summe aus diesem momentanen Gesamtstromverbrauch (ITOT (J)) und dem Stromverbrauch (K (J')) der elektrischen Lasten, die unter den mit diesem bestimmten Schwellenwert (IS) abgeschalteten Lasten den höchsten Prioritätswert aufweisen, zu vergleichen;
- wenn diese Summe höher als der vorbestimmte Schwellenwert (IS) ist, diese Steuerschleife ausgehend von einer neuen Messung dieses Gesamtstromverbrauchs zu wiederholen;
- wenn diese Summe niedriger als der vorbestimmte Schwellenwert (IS) ist, ein Einschaltsignal (R(J)) zu senden, wobei dieses Signal selektiverweise nur durch die peripheren Einheiten (201), die einen Prioritätswert identisch mit diesem erhöhten Wert (J') dieses Zählers aufweisen, empfangen wird, wobei diese peripheren Einheiten (201) das Ausschalten der daran angeschlossenen elektrischen Lasten bewirken;
- diesen Wert (J) des Zählers um eins zu verringern und diese Steuerschleife ausgehend von einer neuen Messung dieses Gesamtstromverbrauchs (ITOT(J)) zu wiederholen.

## Revendications

1. Appareil de contrôle pour un système électrique domestique (100) comprenant au moins:
- une unité centrale (101) équipée avec un capteur (105) pour mesurer la consommation totale en courant électrique de ce système (100), avec une unité logique (103) pour comparer cette consommation mesurée par ce capteur avec une valeur de seuil préfixée, et avec un émetteur (107) ;
- une ou plusieurs unités périphériques (201), à chacune desquelles un chargé électrique peut être connecté, ces unités périphériques comprenant un récepteur (207) et un interrupteur (211) pour allumer / éteindre ce chargé électrique, chacune unité périphérique (201) comprenant en outre des moyens pour assigner à cette unité périphérique une valeur de priorité (J) à l'intérieur d'une échelle de priorité ;
cette unité centrale (101) pouvant envoyer signaux de contrôle à ces unités périphériques pour contrôler l'allumage / éteignement de ces chargés électriques (102,104), cet émetteur de cette unité centrale étant un émetteur sans-fil (107) pour transmettre signaux de contrôle à ces unités périphériques et ces récepteurs de ces unités périphériques (201) étant récepteurs sans-fil (207) pour recevoir ces signaux de contrôle, ces unités périphériques étant en outre équipées avec une unité logique pour décoder ces signaux de contrôle et contrôler par conséquent cet interrupteur (211) **caractérisé en ce que** cette unité centrale (101) est configurée de façon à accomplir un cycle de contrôle comprenant les étapes suivantes :
- préparer un compteur et fixer la valeur (J) de ce compteur égale à zéro ;
- mesurer la consommation totale instantanée en courant électrique (ITOT(J)), cette mesure représentant la consommation en courant électrique de ce système électrique (100) quand les chargés électriques ayant une priorité inférieure à cette valeur (J) de ce compteur sont éteints ;
- comparer cette consommation totale instantanée en courant électrique (ITOT(1)) avec une valeur de seuil préfixée (IS) ;
- au cas où cette consommation totale instantanée en courant électrique (ITOT(J)) est supérieure à cette valeur de seuil préfixée (IS) :
- augmenter cette valeur (J) de ce compteur d'une unité, obtenant ainsi une valeur incrémentée (J') de ce compteur ;
- après une période de temps (t) établies par un temporisateur (113), envoyer un signal d'éteignement (S(J')), ce signal étant sélectivement reçu seulement par les unités périphériques (201) ayant une valeur de priorité égale à cette valeur incrémentée (J') de ce compteur, ces unités périphériques effectuant l'éteignement des chargés électriques connectés à eux-mêmes ;
- mesurer la consommation totale instantanée en courant électrique après l'éteignement de ces chargés électriques, comparer avec la consommation totale instantanée en courant électrique mesurée avant l'éteignement de ces chargés électriques et calculer leur différence (K(J)') ;
- si cette différence est égale à zéro, augmenter ultérieurement cette valeur de ce compteur d'une unité et répéter ce cycle de contrôle à partir de l'étape à laquelle ce signal d'éteignement (S(J')) est envoyé ;
- si cette différence n'est pas égale à zéro, mémoriser cette différence (K(J')), augmenter ultérieurement cette valeur de ce compteur d'une unité et répéter ce cycle de contrôle à partir de l'étape à laquelle cette consommation totale instantanée en courant électrique (ITOT(J)) est mesurée ;
- au cas où cette consommation totale instantanée en courant électrique (ITOT(J)) est inférieure à cette valeur de seuil préfixée :
- si cette valeur (J) de ce compteur est égale à zéro, répéter ce cycle de contrôle à partir d'une nouvelle mesure de cette consommation totale en courant électrique ;
- se cette valeur de ce compteur (J) n'est pas égale à zéro, comparer l'addition de cette consommation totale instantanée en courant électrique (ITOT(J)) et de la consommation électrique (K(J')) des chargés électrique ayant la valeur de priorité la plus haute parmi les chargés qui ont été éteints avec cette valeur de seuil préfixée (IS) ;
- si cette addition est supérieure à cette valeur de seuil préfixée (IS), répéter ce cycle de contrôle à partir d'une nouvelle mesure de cette consommation totale en courant électrique ;
- si cette addition est inférieure à cette valeur de seuil préfixée(IS), envoyer un signal d'allumage (R(J)), ce signal étant sélectivement reçu seulement par ces unités périphériques (201) ayant une valeur de priorité égale à cette valeur (J') de ce compteur, ces unités périphériques effectuant l'allumage des chargés électriques connectés à eux-mêmes ;
- diminuer cette valeur (J) de ce compteur d'une unité et répéter ce cycle de contrôle à partir d'une nouvelle mesure de cette consommation totale en courant électrique (ITOT(J)).

2. Appareil selon la revendications 1, dans lequel ces unité logiques de cette unité centrale (101) et de ces unités périphériques (201) sont préférablement des microprocesseurs.

3. Appareil selon la revendication 2, dans lequel cette unité centrale (101) comprend en outre une mémoire (109) dans laquelle est mémorisée cette différence (K(J')) entre ces valeurs de consommation en courant électrique mesurées par ce capteur (105) avant et après l'envoi d'un signal de contrôle d'éteignement (S(J')) d'un de ces chargés électriques.

4. Appareil selon la revendication 2, dans lequel un chargé électrique de ce système domestique (100) est connecté à cette unité centrale (101), cette unité centrale comprenant un interrupteur (111) contrôlé par ce microprocesseur (103) de cette unité centrale pour allumer / éteindre ce chargé électrique.

5. Appareil selon la revendication 2, dans lequel cette unité centrale (101) et/ou ces unités périphériques (201) comprennent en outre des dispositifs de signalisation lumineux (15,215) et/ou acoustiques (117,217) contrôlés par des signaux di contrôle envoyés par ce microprocesseur (105) de cette unité de contrôle (101).

6. Appareil selon la revendication 2, dans lequel cette unité centrale (101) et ces unités périphériques (201) sont équipées avec commutateurs « dip-switch »(127,227), dont la configuration permets de déterminer que ces unités (101,201) appartiennent à cet appareil et d'identifier ces unités en tant que, respectivement, unité émettrice (101) et unités réceptrices (201).

7. Appareil selon la revendication 6, dans lequel la différente configuration de ces commutateurs « dip-switch » dans ces unités périphériques (201) permets de déterminer la priorité de ces unités périphériques (201).

8. Appareil selon la revendication 2, comprenant en outre une ou plusieurs unités de signalisation (301), équipées avec un récepteur sans-fil pour recevoir signaux de contrôle de cette unité centrale (101), un microprocesseur pour décoder ce signaux de contrôle et dispositifs de signalisation lumineux (315) et/ou acoustiques (317) contrôlés par ces signaux de contrôle.

9. Appareil selon la revendication 2, dans lequel cette unité centrale (101) comprend une enveloppe (121) contenant au moins ce microprocesseur (103) et cet émetteur (107) et comprenant un couple de bornes d'alimentation (125) pour la connexion à ce système électrique.

10. Appareil selon la revendication 2, dans lequel chacune de ces unités périphériques (201) comprend une enveloppe (221) contenant au moins ce microprocesseur (203) et ce récepteur (207) et comprenant une fiche (225) pour la connexion à ce système électrique (100) et une prise électrique (231) pour la connexion à un chargé électrique.

11. Appareil selon la revendication 8, dans lequel chacune de ces unités de signalisation comprend une enveloppe (321) contenant au moins ce microprocesseur (203) et ce récepteur (207) et comprenant une fiche (325) pour la connexion à ce système électrique (100) et un commutateur « dip-switch » pour déterminer que ces unités (301) appartiennent à cet appareil et pour les identifier en tant que unités réceptrices.

12. Appareil selon l'une quelconque des revendication précédentes, dans lequel cet émetteur sans-fil (107) et ces récepteurs sans-fil (207) sont respectivement un émetteur et des récepteurs employant radiofréquences.

13. Appareil selon l'une quelconque des revendications précédentes, dans lequel ces interrupteurs (111,211) de ces unités périphériques et/ou de cette unité centrale comprennent un relais.

14. Méthode pour contrôler un système électrique (100) domestique comprenant les étapes de :
- préparer une unité centrale équipée avec un capteur de courant électrique (105), une unité logique (103) et un émetteur (107) ;
- préparer une ou plusieurs unités périphériques (201) équipées avec un récepteur (207) et un interrupteur (211) pour allumer/éteindre correspondants chargés électriques (102,104) de ce système (100) ;
- assigner une échelle de priorité à ces unités périphériques (201) ;
- mesurer la consommation totale instantanée en courant électrique de ce système (100) ;
- comparer cette consommation instantanée mesurée avec une valeur de seuil préfixée ;
- envoyer un signal de contrôle de cette unité centrale à ces unités périphériques pour éteindre les chargés électriques (102,104) correspondants si cette valeur de seuil est dépassée ;
dans laquelle cet émetteur de cette unité centrale (101) est un émetteur sans-fil (107) pour transmettre signaux de contrôle à ces unités périphériques (201) et ces récepteurs de ces unités périphériques (201) sont récepteurs sans-fil (207) pour recevoir ces signaux de contrôle, ces unités périphériques étant en outre équipées avec une unité logique pour décoder ces signaux de contrôle et contrôler par conséquence cet interrupteur (211) ;
**caractérisée en ce que** cette méthode comprend un cycle de contrôle comprenant les étapes suivantes :
- préparer un compteur et fixer la valeur (J) de ce compteur égale à zéro ;
- mesurer la consommation totale instantanée en courant électrique (ITOT(J)), cette mesure représentant la consommation en courant électrique de ce système électrique (100) quand les chargés électriques ayant une priorité inférieure à cette valeur (J) de ce compteur sont éteints ;
- comparer cette consommation totale instantanée en courant électrique (ITOT(J)) avec une valeur de seuil préfixée (IS) ;
- au cas où cette consommation totale instantanée en courant électrique (ITOT(1)) est supérieure à cette valeur de seuil préfixée (IS) :
- augmenter cette valeur (J) de ce compteur d'une unité, obtenant ainsi une valeur incrémentée (J') de ce compteur ;
- après une période de temps (t) établies par un temporisateur (113), envoyer un signal d'éteignement (S(J')), ce signal étant sélectivement reçu seulement par les unités périphériques (201) ayant une valeur de priorité égale à cette valeur incrémentée (J) de ce compteur, ces unités périphériques effectuant l'éteignement des chargés électriques connectés à eux-mêmes ;
- mesurer la consommation totale instantanée en courant électrique après l'éteignement de ces chargés électriques, comparer avec la consommation totale instantanée en courant électrique mesurée avant l'éteignement de ces chargés électriques et calculer leur différence (K(J)') ;
- si cette différence est égale à zéro, augmenter ultérieurement cette valeur de ce compteur d'une unité et répéter ce cycle de contrôle à partir de l'étape à laquelle ce signal d'éteignement (S(J')) est envoyé ;
- si cette différence n'est pas égale à zéro, mémoriser cette différence (K(J')), augmenter ultérieurement cette valeur de ce compteur d'une unité et répéter ce cycle de contrôle à partir de l'étape à laquelle cette consommation totale instantanée en courant électrique (ITOT(J)) est mesurée ;
- au cas où cette consommation totale instantanée en courant électrique (ITOT(J)) est inférieure à cette valeur de seuil préfixée :
- si cette valeur (J) de ce compteur est égale à zéro, répéter ce cycle de contrôle à partir d'une nouvelle mesure de cette consommation totale en courant électrique ;
- si cette valeur de ce compteur (J) n'est pas égale à zéro, comparer l'addition de cette consommation totale instantanée en courant électrique (ITOT(J)) et de la consommation électrique (K(J')) des chargés électrique ayant la valeur de priorité la plus haute parmi les chargés qui ont été éteints avec cette valeur de seuil préfixée (IS) ;
- si cette addition est supérieure à cette valeur de seuil préfixée (IS), répéter ce cycle de contrôle à partir d'une nouvelle mesure de cette consommation totale en courant électrique ;
- si cette addition est inférieure à cette valeur de seuil préfixée(IS), envoyer un signal d'allumage (R(J)), ce signal étant sélectivement reçu seulement par ces unités périphériques (201) ayant une valeur de priorité égale à cette valeur (J') de ce compteur, ces unités périphériques effectuant l'allumage des chargés électriques connectés à eux-mêmes ;
- diminuer cette valeur (J) de ce compteur d'une unité et répéter ce cycle de contrôle à partir d'une nouvelle mesure de cette consommation totale en courant électrique (ITOT(J)).
